# EUROPEAN PATENT SPECIFICATION

(11) **EP 0 785 966 B1**
(45) Date of publication and mention of the grant of the patent: **01.03.2006**
(21) Application number: 95936257.5
(22) Date of filing: 12.10.1995
(51) Int. Cl.: C08K 5/523, C08K 5/521, C08K 5/52, C08G 64/00

(54) **POLYCARBONATE-CONTAINING POLYMERS FLAME RETARDED WITH OLIGOMERIC PHOSPHATE ESTERS**
MITTELS OLIGOMEREN PHOSPHATESTERN FLAMMGESCHÜTZTE PLOYCARBONAT ENTHALTENDE POLYMERE
POLYMERES CONTENANT DES POLYCARBONATES ET IGNIFUGES AU MOYEN D'ESTERS DE PHOSPHATES OLIGOMERES

(30) Priority: 13.10.1994 US 322883
(43) Date of publication of application: 30.07.1997
(73) Proprietor: Akzo Nobel N.V., 6800 SB Arnhem (NL); Moy, Paul Y., Fishkill, NY 12524 (US); Bright, Danielle A., New City, NY 10956 (US)
(72) Inventor: MOY, Paul, Y., Fishkill, NY 12524 (US); BRIGHT, Danielle, A., New City, NY 10956 (US)
(74) Representative: Beetz, Tom
(86) International application number: PCT/US1995/012801
(87) International publication number: WO 1996/011977

(56) References cited:
- JP-A- 59 045 351
- JP-A- 59 202 240
- US-A- 3 869 526
- US-A- 5 204 394

## Description

### Background of the invention

U.S. Patent No. 5,204,394 to J.C. Gosens et al. advocates the use of arylene-bridged oligomeric polyphosphate esters in the flame retarding of polycarbonate-containing polymer compositions. An oligomeric phosphate or blend of oligomeric phosphates are disclosed by the Gosens et al. patent as having the formula 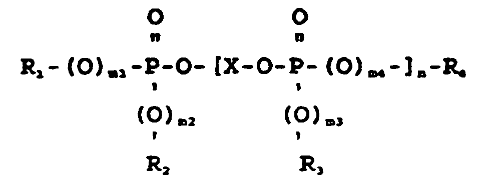
where R₁, R₂, R₃, and R₄ each represent an aryl or an alkaryl group chosen independently of each other and wherein X is an arylene group, m1, m2, m3, and m4, each independently of each other are 0 or 1 and wherein n=1, 2, 3, 4, or 5 or wherein, in the case of a blend of phosphates, n has an average value between 1 and 5.

### Summary of the Invention

It has now been found that a mixture of an alkylene-bridged diphosphate compound and the foregoing type of arylene-bridged oligomeric polyphosphate ester is an effective flame retardant agent in the aforementioned types of polycarbonate-containing polymer compositions . It has been found that there is increased flame retardancy efficacy and improved processing characteristics for the mixture in such polymers.

### Description of Preferred Embodiments

The polycarbonate-containing resins and the arylene-bridged oligomeric phosphate esters to which the present invention is applicable are described in the aforementioned U.S. Patent No. 5, 204,394 which is incorporated herein by reference in regard to such teaching.

The terminology "alkylene-bridged diphosphate compound" as used herein is to be understood to encompass monomeric and low oligomeric species of the formula 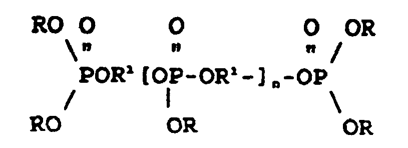
Where R is aryl, such as unsubstituted phenyl, n is a number ranging from 0 to about 5, and R¹ is alkylene of from 1 to 8 carbon atoms.

The present invention contemplates using a mixture comprising the arylene-bridged phosphate compositions and the alkylene-bridged compounds in a ratio of from about 1:2 to about 2:1 on a weight basis in the polycarbonate-containing compositions. Generally speaking, the amount of such mixture used in the polycarbonate-containing compositions will vary from about 1 % to about 25 % on the weight of the polycarbonate-containing composition.

The present invention is illustrated by the Examples which follow.

### EXAMPLES 1-5

These Examples set forth cone calorimetric data (35.0 kW/m² irradiance) on neat PC/ABS, neat resorcinol diphosphate (RDP) and blends of RDP and neopentylglycol diphosphate at various weight amounts.

The polymers composites were preblended to a five to one (PC/ABS) ratio and extruded in a twin screw extruder to a homogeneous blend. The phosphate flame retardant mixtures ("FR" in the Table given below) were preblended in the prescribed ratios before addition to the composites. The incorporation of the flame retardants was accomplished by metering the liquid components into the melt stream of the extruder through a side port injector. All flame retardant composites are formulated to contain a small amount of powdered TEFLON fluoropolymer antidrip agent.

**TABLE 1**

| | | Peak Heat Release | Total Heat | Effective Heat of Combustion |
|---|---|---|---|---|
| FR USED | %P | (kW/m²) | (KJ) | (MJ/kg) |
| NONE | - | 201 | 32.12 | 3.48 |
| RDP (Neat) | 0.91 | 69 | 17.79 | 2.04 |
| RDP/NPGDP (2/1) | 0.92 | 62 | 18.83 | 2.02 |
| RDP/NPGDP (1/1) | 0.71 | 52 | 14.66 | 1.61 |
| RDP/NPGDP (1/2) | 0.80 | 43 | 16.04 | 1.85 |

### EXAMPLES 6-10

These Examples show the melt flow viscosity data (ASTM-1238, Condition "I", 230°C, 3.8 kg) for the blends tested in each of Examples 1-5, above.

| FR Sample (from Ex. 1-5) | g/10 minutes |
|---|---|
| NONE | 13.0 |
| RDP (Neat) | 16.9 |
| RDP/NPGDP (2/1) | 18.8 |
| RDP/NPGDP (1/1) | 15.3 |
| RDP/NPGDP (1/2) | 17.3 |

The foregoing data is presented for purposes of illustrating certain embodiments of the present invention and, for that reason, should not be construed in a limiting sense. The scope of protection sought is set forth in the claims which follow.

## Claims

1. A flame retarded polycarbonate-containing composition which comprises a mixture comprising (1) an arylene-bridged oligomeric polyphosphate ester and (2) an effective amount of an alkylene-bridged diphosphate compound for increased flame retardancy efficacy and improved processing characteristics, and the arylene-bridged ester and the alkylene-bridged compound are in a ratio of from about 1:2 to about 2:1 on a weight basis.

2. The composition as claimed in claim 1 wherein the alkylene-bridged diphosphate compound is of the formula 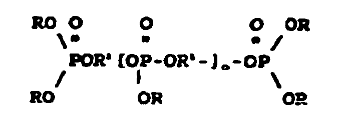
wherein R is aryl, n is a number ranging from 0 to about 5, and
R¹ is alkylene of from 1 to 8 carbon atoms.

3. The composition as claimed in claim 1 wherein the alkylene-bridged diphosphate compound is of the formula 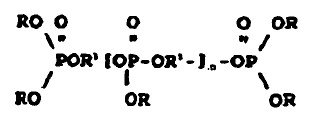
where R is unsubstituted phenyl, n is a number ranging from 0 to about 5, and R¹ is alkylene of from 1 to 8 carbon atoms and the arylene-bridged ester and the alkylene-bridged compound are in a ratio of from about 1:2 to about 2:1 on a weight basis.

4. The composition as claimed in claim 1 wherein the amount of such mixture used in the polycarbonate-containing compositions will vary from about 1 % to about 25 % on the weight of the pqlycarbonate-containing composition.

5. The composition as claimed in claim 2 wherein the amount of such mixture used in the polycarbonate-containing compositions will vary from about 1 % to about 25 % on the weight of the polycarbonate-containing composition.

6. The composition as claimed in claim 3 wherein the amount of such mixture used in the polycarbonate-containing compositions will vary from about 1 % to about 25 % on the weight of the polycarbonate-containing composition.

7. The composition as claimed in claim 1 wherein the arylene-bridged oligomeric polyphosphate ester is resorcinol diphosphate and the alkylene-bridged diphosphate compound is neopentylglycol diphosphate.

8. The composition as claimed in claim 3 wherein the arylene-bridged oligomeric polyphosphate ester is resorcinol diphosphate and the alkylene-bridged diphosphate compound is neopentylglycol diphosphate.

9. The composition as claimed in claim 5 wherein the arylene-bridged oligomeric polyphosphate ester is resorcinol diphosphate and the alkylene-bridged diphosphate compound is neopentylglycol diphosphate.

## Patentansprüche

1. Flammenhemmende, Polycarbonat enthaltende Zusammensetzung, die eine Mischung umfasst, die (1) einen Arylen-verbrückten oligomeren Polyphosphatester und (2) eine wirksame Menge einer Alkylen-verbrückten Diphosphatverbindung für eine gesteigerte flammenhemmende Wirkung und verbesserte Verarbeitungseigenschaften umfasst und wobei der Arylen-verbrückte Ester und die Alkylen-verbrückte Verbindung in einem Verhältnis von etwa 1:2 bis etwa 2:1 auf Gewichtsbasis vorliegen.

2. Zusammensetzung nach Anspruch 1, wobei die Alkylen-verbrückte Diphosphatverbindung die Formel 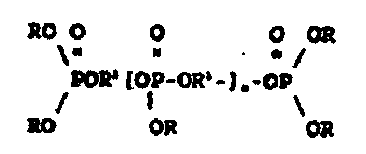
hat, wobei R Aryl ist, n eine Zahl im Bereich von 0 bis etwa 5 ist und
R¹ Alkylen mit 1 bis 8 Kohlenstoffatomen ist.

3. Zusammensetzung nach Anspruch 1, wobei die Alkylen-verbrückte Diphosphatverbindung die Formel 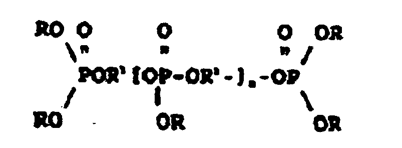
hat, wobei R unsubstituiertes Phenyl ist, n eine Zahl im Bereich von 0 bis etwa 5 ist und R¹ Alkylen mit von 1 bis 8 Kohlenstoffatomen ist und der Aryhen-verbrückte Ester und die Alkylen-verbrückte Verbindung in einem Verhältnis von etwa 1:2 bis etwa 2:1 auf Gewichtsbasis vorliegen..

4. Zusammensetzung nach Anspruch 1, wobei die Menge einer solchen Mischung, die in der Polycarbonat enthaltenden Zusammensetzung verwendet wird, von etwa 1% bis etwa 25% des Gewichts der Polycarbonat enthaltenden Zusammensetzung variiert.

5. Zusammensetzung wie nach Anspruch 2, wobei die Menge einer solchen Mischung, die in der Polycarbonat enthaltenden Zusammensetzung verwendet wird, von etwa 1% bis etwa 25% des Gewichts der Polycarbonat enthaltenden Zusammensetzung variiert.

6. Zusammensetzung nach Anspruch 3, wobei die Menge einer solchen Mischung, die in der Polycarbonat enthaltenden Zusammensetzung verwendet wird, von etwa 1% bis etwa 25% des Gewichts der Polycarbonat enthaltenden Zusammensetzung variiert.

7. Zusammensetzung nach Anspruch 1, wobei der Arylen-verbrückte oligomere Polyphosphatester Resorcinoldiphosphat ist und die Alkylen-verbrückte Diphosphatverbindung Neopentylglycoldiphosphat ist.

8. Zusammensetzung nach Anspruch 3, wobei der Arylen-verbrückte oligomere Polyphosphatester Resorcinoldiphosphat ist und die Alkylen-verbrückte Diphosphatverbindung Neopentylglycoldiphosphat ist.

9. Zusammensetzung nach Anspruch 5, wobei der Arylen-verbrückte oligomere Polyphosphatester Resorcinoldiphosphat ist und die Alkylen-verbrückte Diphosphatverbindung Neopentylglycoldiphosphat ist.

## Revendications

1. Composition ignifugée contenant un ou des polycarbonates qui comprend un mélange comprenant (1) un ester polyphosphate oligomère ponté par arylène et (2) une quantité efficace d'un composé diphosphate ponté par alkylène pour une efficacité d'ignifugation accrue et des caractéristiques de mise en oeuvre améliorées, et l'ester ponté par arylène et le composé ponté par alkylène sont dans un rapport d'environ 1 : 2 à environ 2 : 1 en masse.

2. Composition selon la revendication 1 où le composé diphosphate ponté par alkylène est de formule 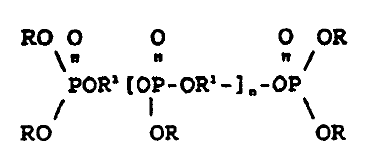
où R est aryle, n est un nombre allant de 0 à environ 5,
et
R¹ est alkylène de 1 à 8 atomes de carbone.

3. Composition selon la revendication 1 où le composé diphosphate ponté par alkylène est de formule 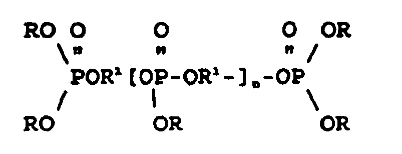
où R est phényle non substitué, n est un nombre allant de 0 à environ 5 et R¹ est alkylène de 1 à 8 atomes de carbone et l'ester ponté par arylène et le composé ponté par alkylène sont dans un rapport d'environ 1 : 2 à environ 2 : 1 en masse.

4. Composition selon la revendication 1 où la quantité d'un tel mélange utilisé dans les compositions contenant un ou des polycarbonates variera d'environ 1 % à environ 25 % par rapport à la masse de la composition contenant un ou des polycarbonates.

5. Composition selon la revendication 2 où la quantité d'un tel mélange utilisé dans les compositions contenant un ou des polycarbonates variera d'environ 1 % à environ 25 % par rapport à la masse de la composition contenant un ou des polycarbonates.

6. Composition selon la revendication 3 où la quantité d'un tel mélange utilisé dans les compositions contenant un ou des polycarbonates variera d'environ 1 % à environ 25 % par rapport à la masse de la composition contenant un ou des polycarbonates.

7. Composition selon la revendication 1 où l'ester polyphosphate oligomère ponté par arylène est le diphosphate de résorcinol et le composé diphosphate ponté par alkylène est le diphosphate de néopentylglycol.

8. Composition selon la revendication 3 où l'ester polyphosphate oligomère ponté par arylène est le diphosphate de résorcinol et le composé diphosphate ponté par alkylène est le diphosphate de néopentylglycol.

9. Composition selon la revendication 5 où l'ester polyphosphate oligomère ponté par arylène est le diphosphate de résorcinol et le composé diphosphate ponté par alkylène est le diphosphate de néopentylglycol.
